# EUROPÄISCHE PATENTSCHRIFT

(11) **EP 2 898 207 B1**
(45) Veröffentlichungstag und Bekanntmachung des Hinweises auf die Patenterteilung: **30.03.2016**
(21) Anmeldenummer: 13773602.1
(22) Anmeldetag: 18.09.2013
(51) Int. Cl.: F02D 13/02

(54) **VERFAHREN ZUM BETREIBEN EINER STEUERZEIT EINES EINLASSVENTILS EINER BRENNKRAFTMASCHINE**
METHOD FOR CONTROLLING THE TIMING OF AN INTAKE VALVE OF AN INTERNAL COMBUSTION ENGINE
PROCÉDÉ DE CONTRÔLLER DE TEMPS D'OUVERTURE D'UN SOUPAPE D'ADMISSION DANS UN MOTEUR À COMBUSTION INTERNE

(30) Priorität: 21.09.2012 DE 102012018692
(43) Veröffentlichungstag der Anmeldung: 29.07.2015
(73) Patentinhaber: Daimler AG, 70327 Stuttgart (DE)
(72) Erfinder: KOCH, Thomas, 76327 Pfinztal-Berghausen (DE)
(74) Vertreter: JENSEN & SON
(86) Internationale Anmeldenummer: PCT/EP2013/002812
(87) Internationale Veröffentlichungsnummer: WO 2014/044388

(56) Entgegenhaltungen:
- EP-A1- 0 609 837
- EP-A2- 2 264 299
- DE-A1-102004 019 183
- US-A1- 2002 177 938

## Beschreibung

Die Erfindung betrifft ein Verfahren zum Betreiben einer zumindest ein Einlassventil aufweisenden Brennkraftmaschine, insbesondere eines Ottomotors. Die Erfindung betrifft ferner eine mit diesem Verfahren betriebene Brennkraftmaschine sowie ein Kraftfahrzeug mit einer derartigen Brennkraftmaschine.

In modernen Nutzfahrzeugen werden üblicherweise Dieselmotoren als Brennkraftmaschinen eingesetzt. Bauartbedingt sind in solchen Dieselmotoren hohe Verdichtungsverhältnisse möglich, die einen vergleichsweise hohen thermodynamischen Wirkungsgrad und in der Folge auch eine hohe Wirtschaftlichkeit eines einen solchen Dieselmotor verwendenden Nutzfahrzeugs nach sich ziehen. Allerdings sind sowohl das Einspritzsystem des Dieselmotors zum Einspritzen von Kraftstoff in eine Brennkammer des Dieselmotors als auch weitere Komponenten des Dieselmotors relativ teuer. Ein weiterer Nachteil bei der Verwendung eines Dieselmotors in Nutzfahrzeugen besteht darin, dass die vom Dieselmotor ausgestoßenen Schadstoffemission, insbesondere in einem Volllastbetrieb der Brennkraftmaschine, nicht vernachlässigbar sind und einer aufwändigen Abgasnachbehandlung bedürfen. Demgegenüber können fremdgezündete Ottomotoren in einem sogenannten Magerbetrieb betrieben werden. Zudem sind die bei der Verbrennung entstehenden Abgase der als Ottomotor ausgebildeten Brennkraftmaschine im Vergleich zu einem Dieselmotor nahezu rußfrei. Demgegenüber ist die Wirtschaftlichkeit von Ottomotoren durch eine Vielzahl von thermodynamischen Randbedingungen begrenzt. Zudem darf im Hinblick auf die sogenannte Klopfneigung von Kraftstoff für Ottomotoren das geometrische Verdichtungsverhältnis ein vorbestimmtes Grenzmaß nicht überschreiten, welches deutlich unter dem eines Dieselmotors liegt. Entsprechend ist der thermodynamische Wirkungsgrad eines Ottomotors kleiner als der eines Dieselmotors.

Zur Verbesserung des thermodynamischen Wirkungsgrades eines Ottomotors kann dieser in einem sogenannten Miller-Betrieb als "Miller-Motor" betrieben werden. In einem solchen Miller-Betrieb wird ein herkömmlicher Ottomotor mit einem gegenüber dem Normalbetrieb des Ottomotors erhöhten Verdichtungsverhältnis betrieben. Um eine daraus resultierende Klopfneigung des Miller-Motors zu reduzieren, werden die Einlassventile der Zylinder der Brennkraftmaschine sehr früh oder sehr spät, also insbesondere deutlich vor oder deutlich nach dem dem unteren Totpunkt des Kolbens der Brennkraftmaschine zugeordneten Kurbelwinkel von 540°, geschlossen. Dies bedeutet, dass das Ansaugen von frischer Verbrennungsluft in die Brennkammer über das Einlassventil entweder vorzeitig abgebrochen wird, oder aber ein Teil der bereits in die Brennkammer angesaugten Luftmenge wieder zurück in den Ansaugtrakt, der dem Einlassventil vorgeschaltet ist, zurückgeschoben wird. In beiden Fällen wird der jeweilige Zylinder nur unvollständig gefüllt, wodurch das unerwünschte Auftreten von Klopfen in der Brennkammer vermieden oder zumindest vermindert werden kann.

Aus dem Stand der Technik, beispielsweise aus der DE 199 50 677 A1, ist bekannt, dass ein herkömmlicher Ottomotor als Miller-Motor in Kombination mit einer Abgasrückführung betrieben werden kann. Weiterhin kann gemäß dieser Weiterbildung die Brennkraftmaschine sowohl in einem Teillast- als auch in einem Volllastbetrieb betrieben werden, so dass durch eine geeignete Steuerzeit-Einstellung des Einlass- und Auslassventils im Volllastbetrieb das erhöhte Verdichtungsverhältnis wieder zurückgenommen werden kann. Zusätzlich kann gemäß dieser Weiterbildung auch eine Aufladung mittels eines der Brennkraftmaschine nachgeschalteten Abgasturboladers erfolgen. Allerdings ist ein derartig betriebener Ottomotor für den Volllastbetrieb nur eingeschränkt geeignet, da die Kolben der Brennkraftmaschine und auch abgasführende Teile im Bereich der Auslassventile hohen thermischen Belastungen unterliegen. Zur Reduzierung dieser unerwünschten hohen thermischen Belastungen wird im Volllastbetrieb üblicherweise eine Anfettung des Kraftstoff-Luftgemisches vorgenommen, was allerdings zu einem erhöhten Kraftstoffverbrauch und auch zu einer erhöhten Schadstoffemission der Brennkraftmaschine führen kann.

Die DE 10 2006 032 719 A1 offenbart ein Verfahren zum Betrieb eines Ottomotors mit verbesserter Wirtschaftlichkeit. Gemäß diesem Verfahren wird mindestens ein Einlassventil des Ottomotors sehr früh oder sehr spät geschlossen. Ein solches sehr frühes bzw. sehr spätes Schließen des mindestens einen Einlassventils erzeugt eine Verringerung des Temperaturniveaus bei verbessertem thermodynamischem Wirkungsgrad. Die durch die Schließzeiten der Einlassventile verringerte Zylinderfüllung wird durch die Verdichtung des Verbrennungsluftstroms mittels eines Abgasturboladers zumindest näherungsweise kompensiert, so dass ein hinreichend hohes Leistungsniveau zur Verfügung steht. Als weitere Maßnahme zur Temperaturverringerung kann dem Verbrennungsluftstrom zumindest bei Volllast ein Teilstrom von abgeführtem Abgas als Abgasrückführung zugeführt werden. Ein Nachteil dieses Verfahrens besteht jedoch darin, dass in einem sogenannten Transient-Betrieb der Brennkraftmaschine, d.h. während eines Lastwechsels der Brennkraftmaschine von einer niedrigen Last zu einer höheren Last oder gar zu einer Volllast, die Lastaufnahme oder auch der Wirkungsgrad der Brennkraftmaschine relativ unbefriedigend ist.

Es ist eine Aufgabe der vorliegenden Erfindung ein Verfahren zum Betreiben einer Brennkraftmaschine anzugeben, bei welcher oben genannte Nachteile beseitigt oder zumindest reduziert sind. Es ist eine weitere Aufgabe der vorliegenden Erfindung, eine entsprechende Brennkraftmaschine zur Durchführung eines solchen verbesserten Verfahrens anzugeben.

Oben genannte Aufgabe wird gelöst durch den Gegenstand der unabhängigen Ansprüche. Bevorzugte Ausführungsformen sind Gegenstand der abhängigen Ansprüche.

Die Erfindung beruht auf dem allgemeinen Gedanken, bei einem Übergang der Brennkraftmaschine von einem Teillastbetrieb in einen Volllastbetrieb, also im sogenannten Transientbetrieb, den Zeitpunkt des Schließens des Einlassventils für einen vordefinierten Zeitraum, also temporär, in Richtung zu einem Zeitpunkt hin zu verschieben, zu welchem sich der Kolben der Brennkraftmaschine an einem unteren Totpunkt befindet. Dies bedeutet, dass sich der Kolben während des Übergangs vom Teillast- in den Volllastbetrieb zum Zeitpunkt des Schließens des Einlassventils näher an der unteren Totpunkt-Position befindet als während des eigentlichen Teillast- oder Volllastbetriebs. Auf diese Weise wird beim Übergang vom Teillast- in den Volllastbetrieb kurzzeitig eine erhöhte Luftmenge in die Brennkammer eingebracht. Mittels eines derartigen kurzfristig erhöhten Luftmassendurchsatzes durch die Brennkammer der Brennkraftmaschine wird auch die Turbinenleistung des Abgasturboladers vorübergehend erhöht, was eine vorübergehende Leistungssteigerung der gesamten Brennkraftmaschine zur Folge hat. Mittels des erfindungsgemäßen Verfahrens kann somit die beim Übergang vom Teillast- in den Volllastbetrieb erwünschte Leistungszunahme gegenüber herkömmlichen, oben erläuterten Verfahren besonders schnell und effektiv zur Verfügung gestellt werden. Gleichzeitig kann aber auch der Kraftstoffverbrauch der Brennkraftmaschine beim Transientbetrieb wie auch beim Teillast- und Volllastbetrieb generell relativ niedrig gehalten werden.

Im reinen Teillast- bzw. Volllastbetrieb wird gemäß des erfindungsgemäßen Verfahrens die Brennkraftmaschine in einem herkömmlichen Miller-Betrieb, in welchem das mindestens eine Einlassventil der Brennkraftmaschine zu einem sehr frühen ersten Zeitpunkt geschlossen wird, oder in einem sogenannten Atkinson-Betrieb, in welchem das mindestens eine Einlassventil der Brennkraftmaschine zu einem sehr späten zweiten Zeitpunkt geschlossen wird, betrieben. Das erfindungsgemäße Verfahren basiert also auf einem herkömmlichen Miller- bzw. Atkinson-Betrieb der Brennkraftmaschine unter Teil- und Volllast sowie aus einem modifizierten Verfahren im Transientbetrieb beim Übergang von der Teillast zur Volllast.

In einer bevorzugten Ausführungsform wird im reinen Vollast- oder/und Teillastbetrieb der Brennkraftmaschine das zumindest eine Einlassventil geschlossen, wenn der Kolben der Brennkraftmaschine einen relativen Kurbelwinkel von entweder im Wesentlichen -70° ("Miller-Betrieb") oder im Wesentlichen +70° ("Atkinson-Betrieb") relativ zu einem Ansaugtakt der Brennkraftmaschine zugeordneten unteren Totpunkt des Kolbens der Brennkraftmaschine aufweist. Abhängig von der Gesamtsystemauslegung und der Falle einer vorhandenen aber nicht notwendigen variablen Ventiltriebsausführung mit darstellbaren verschiedenartigen und umschaltbaren Nockenformen, ergibt sich um den oben genannten Wert von 70°KW eine Variation von +-30°KW.

Im Transientbetrieb, also beim Übergang vom Teillastbetrieb in den Volllastbetrieb, wird das Einlassventil der Brennkraftmaschine erfindungsgemäß für einen vordefinierten Zeitraum bei einem relativen Kurbelwinkel von im Wesentlichen von z.B. -67° bzw. +67° geschlossen, also im Bereich des unteren Totpunktes. Auf diese Weise kann eine besonders schnelle Leistungssteigerung der Brennkraftmaschine im Transientbetrieb bei gleichzeitig niedrigem Kraftstoffverbrauch und niedrigem Schadstoffausstoß erzielt werden.

In einer weiterbildenden Ausführungsform beträgt der vorbestimmte Zeitraum mindestens 0,2 ms. Auf diese Weise wird eine ausreichende Leistungszunahme des der Brennkraftmaschine nachgeschalteten des Abgasturboladers sichergestellt.

In einer weiteren Ausführungsform kann daran gedacht sein, dass in dem vordefinierten Zeitraum eine Reduzierung einer Abgasrückführrate des Abgases in der Brennkraftmaschine erfolgt. Hierzu kann eine Niederdruck- oder/und Hochdruck-Abgasrückführungseinrichtung der Brennkraftmaschine ein entsprechendes Stellventil aufweisen, welches zur Reduzierung der Abgasrückführrate vorübergehend teilweise oder sogar ganz geschlossen wird, so dass der Abgas-Rückführungsstrom gegenüber dem Teillast- und Volllastbetrieb der Brennkraftmaschine in dem Transientbetrieb vorübergehend reduziert wird.

In einer besonders bevorzugten Ausführungsform kann daran gedacht sein, dass eine Wastegate-Öffnung einer Wastegate-Einrichtung des der Brennkraftmaschine nachgeschalteten Abgasturboladers wenigstens für den vordefinierten Zeitraum des Übergangs vom Teillast- in den Volllastbetrieb geschlossen wird. Durch das Schließen der Wastegate-Öffnung kann die Turbinenleistung des Abgasturboladers während des Transientbetriebs maximiert und somit die im Transientbetrieb erwünschte Leistungssteigerung besonders schnell und effektiv erreicht werden. Alternativ oder zusätzlich zum Schließen der Wastegate-Öffnung kann auch eine im Abgasturbolader gegebenenfalls vorhandene variable Turbinengeometrie der Turbine des Abgasturboladers entsprechend verstellt werden.

Zur weiteren Wirkungsgradverbesserung der das erfindungsgemäße Verfahren ausführenden Brennkraftmaschine kann in einer bevorzugten Ausführungsform während des vordefinierten Zeitraums ein Zündzeitpunkt einer Zündvorrichtung der Brennkraftmaschine um einen vorbestimmten Verzögerungszeitraum bzw. um einen vorbestimmten relativen Kurbelwinkel des Kolbens verzögert, also nach spät, werden. Dieser vorbestimmte relative Kurbelwinkel kann in einer besonders bevorzugten Ausführungsform im Wesentlichen +5° bis +23°, mit zunehmender AGR-Rate geringer werdend, relativ zu einem Zündungstakt der Brennkraftmaschine zugeordneten oberen Totpunkt des Kolbens der Brennkraftmaschine betragen.

Die Erfindung betrifft ferner eine Brennkraftmaschine mit einer Aufladeeinheit, die zur Durchführung des Verfahrens mit einem oder mehreren der vorangehend erläuterten Merkmale ausgebildet ist und die eine Steuerungseinrichtung aufweist, die derart ausgebildet ist, dass sie in einem Teillastbetrieb mindestens ein Einlassventil der Brennkraftmaschine zu einem sehr frühen ersten Zeitpunkt oder zu einem sehr späten zweiten Zeitpunkt schließt, wobei während eines Übergangs vom Teillastbetrieb in einen Volllastbetrieb, dem sogenannten Transientbetrieb, für einen vordefinierten Zeitraum das mindestens eine Einlassventil der Brennkraftmaschine zu einem frühen dritten Zeitpunkt oder zu einem späten vierten Zeitpunkt schließt, und wobei der dritte Zeitpunkt nach dem ersten Zeitpunkt und der vierte Zeitpunkt vor dem zweiten Zeitpunkt liegt.

Die Erfindung betrifft ein Kraftfahrzeug mit einer vorangehend erläuterten erfindungsgemäßen Brennkraftmaschine sowie mit einer Abgasleitung, in welcher ein Abgasturbolader angeordnet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: ein Ausführungsbeispiel einer erfindungsgemäßen Brennkraftmaschine,
- Fig. 2: ein Diagramm, welches die in dem erfindungsgemäßen Verfahren relevanten Kurbelwinkel-Positionen des Kolbens verdeutlicht.

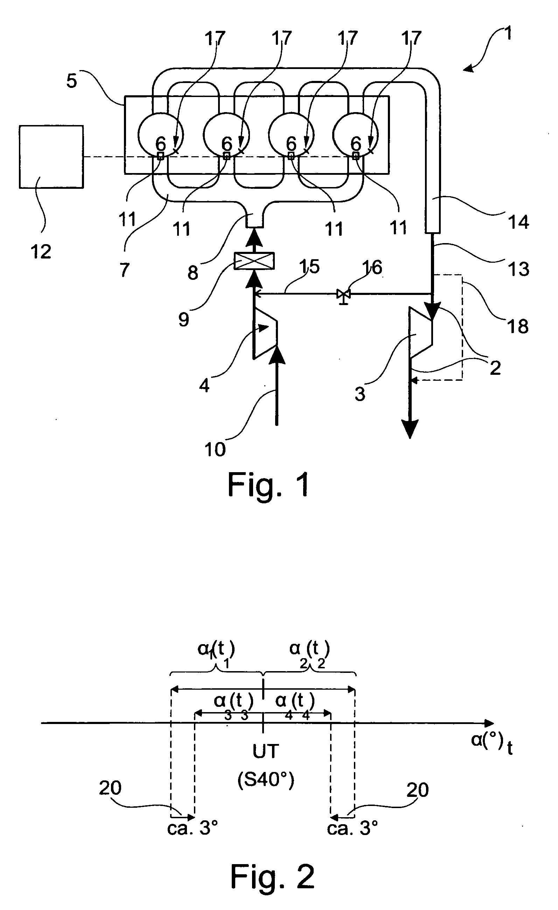

In der Figur 1 ist eine Brennkraftmaschine zur Durchführung des erfindungsgemäßen Verfahrens grobschematisch dargestellt und mit 1 bezeichnet. Die Brennkraftmaschine 1 umfasst eine Aufladeeinheit 2. Die Aufladeeinheit 2 ist in dem Ausführungsbeispiel gemäß der Figur 1 in Form eines Abgasturboladers 2 mit einer Turbine 3 und einem Verdichter 4 ausgeführt. Selbstverständlich ist auch eine Aufladeeinheit denkbar, die mehrere Abgasturbolader oder einen oder mehrere Abgasturbolader und einem mechanischen Lader umfasst. Dabei kann der Abgasturbolader eine variable Turbinengeometrie aufweisen. Die Brennkraftmaschine 1 umfasst einen Zylinderblock 5, in welchem exemplarisch vier Zylinder 6 angeordnet sind. Selbstverständlich kann in Varianten des Ausführungsbeispiels jedoch auch eine andere Anzahl an Zylindern 6 vorgesehen sein. Die Brennkraftmaschine 1 ist als Ottomotor ausgebildet. In die Zylindern 6 wird über eine Ansaugleitung 8, welche einen Ansaugkrümmer 7 aufweisen kann, Frischluft zugeführt. In der Ansaugleitung 8 kann auch ein Kühler 9 angeordnet sein.

Mittels des Kühlers 9 kann die den Zylindern 6 zuzuführende Ansaugluft gekühlt werden, so dass die Arbeitstemperatur in den Zylindern 6 auf vorteilhafte Weise abgesenkt werden kann. In einer vereinfachten Variante kann auf den Kühler 9 aber auch verzichtet sein.

In den Zylindern 6 der Brennkraftmaschine 1 sind in diesen auf- und ab beweglich geführte Kolben angeordnet, was der Übersichtlichkeit halber in der vereinfachten Darstellung der Figur 1 nicht gezeigt ist. In dem erfindungsgemäßen Verfahren wird der der Brennkraftmaschine 1 zugeführte Luftmassenstrom mit Hilfe des Abgasturboladers 2 verdichtet. Zur Bildung eines in den Zylindern 6 zu verbrennenden Kraftstoff-Luftgemisches wird Kraftstoff entweder in die Ansaugleitung 8 (Saugrohreinspritzung) oder direkt in die Zylinder 6 (Direkteinspritzung) eingespritzt.

Die Steuerung der Zufuhr des Luftmassenstroms (vgl. Pfeil 10) in den Zylindern 6 erfolgt über nur grobschematisch dargestellte Einlassventile 11, wobei jeder Zylinder 6 jeweils mindestens ein Einlassventil 11 aufweist. Die Einlassventile 11 sind zwischen einem geöffneten und einem geschlossenen Zustand verstellbar, wobei ein Öffnungsgrad der Einlassventile 11 mittels einer Steuerungseinrichtung 12 eingestellt werden kann.

Die bei der Verbrennung des Kraftstoff-Luftgemisches in den Zylindern 6 entstehenden Abgase werden als Abgasstrom (vgl. Pfeil 13) aus den Zylindern 6 über eine Abgasleitung 14 abgeführt. Die Auslassteuerung des Abgasstromes 13 erfolgt mittels in der Figur 1 nicht gezeigter Auslassventile, wobei entsprechend den Einlassventilen 11 jedem einzelnen Zylinder 6 auch jeweils mindestens ein Auslassventil zugeordnet ist.

Die Abgasleitung 14 kann mit der Ansaugleitung 8 über eine Hochdruck-Abgasrückführungsleitung 15 verbunden sein. Alternativ oder zusätzlich zur Hochdruck-Abgasrückführungsleitung 15 kann auch eine in der Figur 1 nicht gezeigte Niederdruck-Abgasrückführung vorgesehen sein. Die Hochdruck-Abgasrückführungsleitung 15 kann ein Stellglied 16 in der Art eines Hochdruck-Ventils aufweisen, mittels welchem der rückzuführende Abgasmassenstrom eingestellt werden kann. Entsprechendes gilt analog für eine gegebenenfalls vorhandene Niederdruck-Abgasrückführung.

Der nicht rückgeführte Anteil des Abgasstromes wird durch die Turbine 3 des Abgasturboladers 2 geführt, wobei mittels der Turbine 3 der Verdichter 4 des Abgasturboladers 2 angetrieben wird. Der Verdichter 4 verdichtet den Verbrennungsluftstrom, bevor dieser in die Zylinder 6 eingebracht wird. Die Abgasrückführungsleitung 15 kann stromauf der Turbine 3 von der Abgasleitung 14 als sog. Hochdruck-Abgasrückführung abzweigen, alternativ oder zusätzlich aber auch, wie bereits erläutert, stromab der Turbine 3 von der Abgasleitung 14 als sog. Niederdruck-Abgasrückführung abzweigen (nicht gezeigt).

In einem Teillastbetrieb werden die jeweiligen Einlassventile 11 der Zylinder 6 der Brennkraftmaschine 1 jeweils entweder zu einem sehr frühen ersten Zeitpunkt t₁ (Miller-Betrieb) oder zu einem sehr späten zweiten Zeitpunkt t₂ (Atkinson-Betrieb) geschlossen. Dabei folgt das Schließen der Einlassventile 11 in dem Teillastbetrieb genau dann, wenn die Kolben der Zylinder 6 der Brennkraftmaschine 1 einen relativen Kurbelwinkel von entweder im Wesentlichen -70° (Miller-Betrieb) oder im Wesentlichen +70° (Atkinson-Betrieb) relativ zu einem Ansaugtakt der Brennkraftmaschine 1 zugeordneten unteren Totpunkt UT des jeweiligen Kolbens aufweist. Dies ist in der Darstellung der Figur 2 genauer dargestellt, welche den Kurbelwinkel α des Kolbens eines jeweiligen Zylinders 6 in einem vereinfachten Diagramm darstellt. Der untere Totpunkt der Kolben ist dabei mit "UT" bezeichnet. Der untere Totpunkt UT entspricht einem absoluten Kolbenwinkel von 540°.

Auch im stationären Volllastbetrieb soll mit einem frühem oder einem späten Schließen der Einlassventile 11 aus Wirkungsgradgründen operiert werden.

Erfindungsgemäß wird nun in einem Teillastbetrieb das mindestens eine Einlassventil 11 der Brennkraftmaschine 1 zu einem sehr frühen ersten Zeitpunkt t₁ (Miller-Betrieb) oder zu einem sehr späten zweiten Zeitpunkt t₂ (Atkinson-Betrieb) geschlossen. Dabei entspricht der erste Zeitpunkt t₁ einem relativen Kurbelwinkel α₁ (relativ zu dem unteren Totpunkt UT) bzw. einem relativen Kurbelwinkel α₂ ebenfalls relativ zu dem unteren Totpunkt UT, wobei der dem sehr frühen ersten Zeitpunkt t₁ zugeordnete relative Kurbelwinkel α₁ im Wesentlichen -40° bis -100° beträgt und der dem sehr späten zweiten Zeitpunkt t₂ zugeordnete relative Kurbelwinkel α₂ im Wesentlichen +40° bis +100° beträgt. Vorzugsweise beträgt der Kurbelwinkel α₁ im Wesentlichen -70° und der Kurbelwinkel α₂ im Wesentlichen +70°.

Erfindungsgemäß wird nun beim Transientbetrieb der Brennkraftmaschine 1, also beim Übergang vom Teillastbetrieb in den Volllastbetrieb, der jeweilige relative Kurbelwinkel α₁ bzw. α₂ zu dem unteren Totpunkt UT hin reduziert, und zwar für einen vordefinierten Zeitraum, der vorzugsweise mindestens 2 ms beträgt. Bevorzugt kann die relative Verschiebung des relativen Kolbenwinkels α zum unteren Totpunkt hin jeweils mindestens 3° betragen, was bedeutet, dass sich der dem ersten relativen Kurbelwinkel α₁ zugeordnete sehr frühe erste Zeitpunkt t₁ zu einem frühen dritten Zeitpunkt t₃ hin verschiebt, wobei der frühe dritte Zeitpunkt t₃ zeitlich nach dem ersten Zeitpunkt t₁ liegt. Entsprechend verschiebt sich der sehr späte zweite Zeitpunkt t₂ zu einem späten vierten Zeitpunkt t₄ hin, der zeitlich vor dem sehr späten zweiten Zeitpunkt t₂ liegt. Übertragen auf den Kurbelwinkel α bedeutet dies, dass sich der relative Kurbelwinkel jeweils um mindestens 3° zum unteren Totpunkt UT hin verschiebt, was in der Figur 2 durch die Pfeile mit dem Bezugszeichen 20 zum Ausdruck gebracht werden soll. Folglich erfolgt im Transientbetrieb das Schließen der Einlassventile 11 bei einem relativen Kurbelwinkel α von im Wesentlichen -67° (Miller) bzw. +67° (Atkinson). Die entsprechenden relativen Kurbelwinkel sind dabei in der Figur 2 mit α₃ (Miller-Betrieb) bzw. α₄ (Atkinson-Betrieb) bezeichnet.

In dem vordefinierten Zeitraum, welcher vorzugsweise mindestens 0,2 ms beträgt, kann auch eine Abgasrückführrate von mittels der Hochdruck-Abgasrückführungsleitung 15 rückgeführtem Abgas durch entsprechendes Einstellen des Stellglieds 16 wenigstens für den vordefinierten Zeitraum auf einen vorbestimmten relativen Wert, beispielsweise 80% einer normalen Rückführrate im Teil- und Volllastbetrieb der Brennkraftmaschine 1, reduziert werden. Auf diese Weise kann die Turbinenleistung der Turbine 3 des Abgasturboladers 2 vorübergehend erhöht werden, was auch zu einer erhöhten Verdichterleistung des Verdichters 4 des Abgasturboladers 2 und somit zu einer Leistungssteigerung der gesamten Brennkraftmaschine 1 führt.

Während des vordefinierten Zeitraums kann auch ein Zündzeitpunkt einer Zündvorrichtung 17, die jeweils in jedem der Zylinder 6 angeordnet ist und in der Figur 1 nur grobschematisch angedeutet ist, um einen vorbestimmten Verzögerungszeitraum oder um einen vorbestimmten relativen Kurbelwinkel α_{z} des jeweiligen Kolbens der Zylinder 6 verzögert werden. Die Verstellung des Zündzeitpunkts erfolgt in Richtung Spätverstellung. Der vorbestimmte relative Kurbelwinkel α_{z} beträgt dabei vorzugsweise im Wesentlichen +5° bis +23° relativ zu einem einen Zündungstakt der Brennkraftmaschine 1 zugeordneten oberen Totpunkt ("OT") des jeweiligen Kolben der Zylinder 6 der Brennkraftmaschine 1.

Alternativ oder zusätzlich kann wenigstens für den vordefinierten Zeitraum eine Wastegate-Öffnung einer in der Figur 1 nur grobschematisch angedeuteten Wastegate-Einrichtung 18 des der Brennkraftmaschine 1 nachgeschalteten Abgasturboladers 2 wenigstens für den vordefinierten Zeitraum des Übergangs vom Teillast- in den Volllastbetrieb geschlossen werden, um auf diese Weise die Turbinenleistung der Turbine 3 und somit auch die Verdichterleistung des Verdichters 4 des Abgasturboladers 2 zu erhöhen.

## Patentansprüche

1. Verfahren zum Betreiben einer zumindest ein Einlassventil (11) aufweisenden Brennkraftmaschine (1), insbesondere eines Ottomotors, bei dem
- ein der Brennkraftmaschine (1) zugeführter Ladeluftstrom mit einem Abgasturbolader (2) verdichtet wird,
- in einem Teillastbetrieb das mindestens eine Einlassventil (11) der Brennkraftmaschine (1) zu einem sehr frühen ersten Zeitpunkt (t₁) oder zu einem sehr späten zweiten Zeitpunkt (t₂) geschlossen wird,
- bei einem Übergang vom Teillastbetrieb in einen Volllastbetrieb für einen vordefinierten Zeitraum das zumindest eine Einlassventil (11) zu einem frühen dritten Zeitpunkt (t₃) oder zu einem späten vierten Zeitpunkt (t₄) geschlossen wird, wobei der dritte Zeitpunkt (t₃) nach dem ersten Zeitpunkt (t₁) und der vierte Zeitpunkt (t₄) vor dem zweiten Zeitpunkt (t₂) liegt.

2. Verfahren nach Anspruch 1,
**dadurch gekennzeichnet, dass**
- im Teillastbetrieb der Brennkraftmaschine (1) das zumindest eine Einlassventil (11) geschlossen wird, wenn ein Kolben der Brennkraftmaschine (1) einen relativen Kurbelwinkel (α₁ bzw. α₂) von entweder im Wesentlichen -40° bis -100° oder im Wesentlichen +40° bis 100° relativ zu einem, einem Ansaugtakt der Brennkraftmaschine (1) zugeordneten unteren Totpunkt (UT) des Kolbens aufweist.

3. Verfahren nach Anspruch 1,
**dadurch gekennzeichnet, dass**
- im Teillastbetrieb der Brennkraftmaschine (1) das zumindest eine Einlassventil (11) geschlossen wird, wenn ein Kolben der Brennkraftmaschine (1) einen relativen Kurbelwinkel (α₁ bzw. α₂) von entweder im Wesentlichen -70° oder im Wesentlichen +70° relativ zu einem, einem Ansaugtakt der Brennkraftmaschine (1) zugeordneten unteren Totpunkt (UT) des Kolbens aufweist,
- das zumindest eine Einlassventil (11) beim Übergang der Brennkraftmaschine (1) vom Teillastbetrieb in den Volllastbetrieb für den vordefinierten Zeitraum bei einem relativen Kurbelwinkel (α₃ bzw. α₄) von im Wesentlichen -67° bzw. +67° geschlossen wird.

4. Verfahren nach einem der Ansprüche 1 bis 3,
**dadurch gekennzeichnet, dass**
der vordefinierte Zeitraum mindestens 0,2ms beträgt.

5. Verfahren nach einem der vorhergehenden Ansprüche,
**dadurch gekennzeichnet, dass**
in dem vordefinierten Zeitraum eine Reduzierung einer Abgasrückführrate erfolgt.

6. Verfahren nach einem der vorhergehenden Ansprüche,
**dadurch gekennzeichnet, dass**
eine Wastegate-Öffnung einer Wastegate-Einrichtung (18) des der Brennkraftmaschine (1) nachgeschalteten Abgasturboladers (2) wenigstens für den vordefinierten Zeitraum des Übergangs geschlossen wird.

7. Verfahren nach einem der vorhergehenden Ansprüche,
**dadurch gekennzeichnet, dass**
während des vordefinierten Zeitraums ein Zündzeitpunkt einer Zündvorrichtung (17) der Brennkraftmaschine (1) um einen vorbestimmten Verzögerungszeitraum oder um einen vorbestimmten relativen Kurbelwinkel des Kolbens verzögert wird.

8. Verfahren nach Anspruch 7,
**dadurch gekennzeichnet, dass**
der vorbestimmte relative Kurbelwinkel im Wesentlichen +5° bis +23° relativ zu einem Zündungstakt der Brennkraftmaschine (1) zugeordneten oberen Totpunkt (OT) des Kolbens beträgt.

9. Brennkraftmaschine (1) mit einer Aufladeeinheit (2), die zur Durchführung des Verfahrens nach einem der Ansprüche 1 bis 7 ausgebildet ist und die eine Steuerungseinrichtung (12) aufweist, die derart ausgebildet ist, dass sie
- in einem Teillastbetrieb das mindestens eine Einlassventil (11) der Brennkraftmaschine (1) zu einem sehr frühen ersten Zeitpunkt (t₁) oder zu einem sehr späten zweiten Zeitpunkt (t₂) schließt,
- bei einem Übergang vom Teillastbetrieb in einen Volllastbetrieb für einen vordefinierten Zeitraum das mindestens eine Einlassventil (11) der Brennkraftmaschine (1) zu einem frühen dritten Zeitpunkt (t₃) oder zu einem späten vierten Zeitpunkt (t₄) schließt, wobei der dritte Zeitpunkt (t₃) nach dem ersten Zeitpunkt (t₁) und der vierte Zeitpunkt (t₄) vor dem zweiten Zeitpunkt (t₂) liegt.

10. Kraftfahrzeug mit einer Brennkraftmaschine (1) nach Anspruch 8 und mit einer Abgasleitung (14), in welcher ein Abgasturbolader (2) angeordnet ist.

## Claims

1. Method for operating an internal combustion engine (1) having at least one intake valve (11), in particular an SI engine, wherein
- a charge air stream fed to the internal combustion engine (1) is compressed with a turbocharger (2),
- the at least one intake valve (11) of the internal combustion engine (1) is closed at a very early first point in time (t₁) or a very late second point in time (t₂) in a part-load operation,
- the at least one intake valve (11) is closed at an early third point in time (t₃) or at a late fourth point in time (t₄) for a predefined period of time during a transition from the part-load operation to a full-load operation, the third point in time (t₃) being later than the first point in time (t₁) and the fourth point in time (t₄) being earlier than the second point in time (t₂).

2. Method according to claim 1,
**characterised in that**
- the at least one intake valve (11) is closed in the part-load operation of the internal combustion engine (1) if a piston of the internal combustion engine (1) has a relative crank angle (α₁ or α₂) of either substantially -40° to -100° or substantially +40° to +100° relative to a bottom dead centre (UT) of the piston which is assigned to an intake stroke of the internal combustion engine (1).

3. Method according to claim 1,
**characterised in that**
- the at least one intake valve (11) is closed in the part-load operation of the internal combustion engine (1) if a piston of the internal combustion engine (1) has a relative crank angle (α₁ or α₂) of either substantially -70° or substantially +70° relative to a bottom dead centre (UT) of the piston which is assigned to an intake stroke of the internal combustion engine (1),
- in the transition of the internal combustion engine (1) from part-load operation to full-load operation, the at least one intake valve (11) is closed for the predefined period of time at a relative crank angle (α₃ or α₄) of substantially -67° or +67°.

4. Method according to any of claims 1 to 3,
**characterised in that**
the predefined period of time is at least 0.2 ms.

5. Method according to any of the preceding claims,
**characterised in that**
the exhaust gas recirculation rate is reduced in the predefined period of time.

6. Method according to any of the preceding claims,
**characterised in that**
a wastegate opening of a wastegate device (18) of the turbocharger (2) provided downstream of the internal combustion engine (1) is closed at least for the predefined period of time of the transition.

7. Method according to any of the preceding claims,
**characterised in that**
during the predefined period of time an ignition point of an ignition device (17) of the internal combustion engine (1) is delayed by a predetermined delay period or by a predetermined relative crank angle of the piston.

8. Method according to claim 7,
**characterised in that**
the predetermined relative crank angle is substantially +5° to +23° relative to a top dead centre (OT) of the piston which is assigned to an ignition stroke of the internal combustion engine (1).

9. Internal combustion engine (1) with a charging unit (2) designed for carrying out the method according to any of claims 1 to 7 and comprising a control device (12) designed such that
- it closes the at least one intake valve (11) of the internal combustion engine (1) at a very early first point in time (t₁) or a very late second point in time (t₂) in a part-load operation,
- it closes the at least one intake valve (11) of the internal combustion engine (1) at an early third point in time (t₃) or at a late fourth point in time (t₄) for a predefined period of time during a transition from the part-load operation to a full-load operation, the third point in time (t₃) being later than the first point in time (t₁) and the fourth point in time (t₄) being earlier than the second point in time (t₂).

10. Motor vehicle comprising an internal combustion engine (1) according to claim 8 and an exhaust pipe (14), in which a turbocharger (2) is located.

## Revendications

1. Procédé destiné à faire fonctionner un moteur à combustion interne (1) comprenant au moins une soupape d'admission (11), en particulier un moteur à étincelles, selon lequel
- un compresseur (2) des gaz d'échappement comprime un flux d'air de suralimentation amené au moteur à combustion interne (1),
- en cas de charge partielle ladite soupape d'admission (11) du moteur à combustion interne (1) se ferme à un premier moment très précoce (t₁) ou à un deuxième moment très tardif (t₂),
- au moment de la transition d'une charge partielle à une pleine charge pour une durée prédéfinie ladite soupape d'admission (11) se ferme à un troisième moment précoce (t₃) ou à un quatrième moment tardif (t₄), le troisième moment (t₃) se produisant après le premier moment (t₁) et le quatrième moment (t₄) avant le deuxième moment (t₂).

2. Procédé selon la revendication 1, **caractérisé en ce que**
- en cas de charge partielle du moteur à combustion interne (1) ladite soupape d'admission (11) se ferme lorsqu'un piston du moteur à combustion interne (1) présente un angle de vilebrequin relatif (α₁ ou α₂) soit compris essentiellement entre - 40 ° et -100 ° soit compris essentiellement entre +40 ° et 100 ° par rapport à un point mort (UT) bas du piston affecté à une course d'admission du moteur à combustion interne (1).

3. Procédé selon la revendication 1, **caractérisé en ce que**
- en cas de charge partielle du moteur à combustion interne (1) ladite soupape d'admission (11) se ferme lorsqu'un piston du moteur à combustion interne (1) présente un angle de vilebrequin relatif (α₁ ou α₂) soit essentiellement de -70° soit de +70° par rapport à un point mort (UT) bas du piston affecté à une course d'admission du moteur à combustion interne (1),
- ladite soupape d'admission (11) lors de la transition du moteur à combustion interne (1) d'une charge partielle à une charge pleine pour la durée prédéfinie se ferme à un angle de vilebrequin (α₃ ou α₄) compris essentiellement entre -67° et +67°.

4. Procédé selon l'une quelconque des revendications 1 à 3, **caractérisé en ce que** la durée prédéfinie s'élève au moins à 0,2 ms.

5. Procédé selon l'une quelconque des revendications précédentes, **caractérisé en ce que** pendant la durée prédéfinie se produit une réduction d'un taux de circulation de gaz d'échappement.

6. Procédé selon l'une quelconque des revendications précédentes, **caractérisé en ce qu'**une ouverture de soupape de décharge d'un dispositif de soupape de décharge (18) du compresseur de gaz d'échappement (2) monté en aval du moteur à combustion interne (1) se ferme au moins pou la durée prédéfinie de transition.

7. Procédé selon l'une quelconque des revendications précédentes, **caractérisé en ce que** pendant la durée prédéfinie un point d'allumage d'un dispositif d'allumage (17) du moteur à combustion interne (1) est retardé d'un temps de retard prédéfini ou selon un angle de vilebrequin relatif prédéfini du piston.

8. Procédé selon la revendication 7, **caractérisé en ce que** l'angle de vilebrequin relatif prédéfini est essentiellement compris entre +5° et +23° par rapport à un point mort (OT) haut du piston affecté à un temps d'allumage du moteur à combustion interne (1).

9. Moteur à combustion interne (1) comprenant une unité de suralimentation (2) qui est conçue pour l'exécution du procédé selon l'une quelconque des revendications 1 à 7, et qui présente un dispositif de commande (12) qui est conçu de telle sorte qu'il
- ferme en cas de charge partielle ladite soupape d'admission (11) du moteur à combustion interne (1) à un premier moment très précoce (t₁) ou à un deuxième moment très tardif (t₂),
- ferme au moment de la transition entre la charge partielle et la charge pleine pour une durée prédéfinie ladite soupape d'admission (11) du moteur à combustion interne (1) à un troisième moment précoce (t₃) ou à un quatrième moment tardif (t₄), le troisième moment (t₃) se produit après le premier moment (t₁) et le quatrième moment (t₄) avant le deuxième moment (t₂).

10. Véhicule automobile comprenant un moteur à combustion interne (1) selon la revendication 8 et présentant une conduite de gaz d'échappement (14) dans laquelle est disposé un compresseur de gaz d'échappement (2).
